(19) **Europäisches Patentamt / European Patent Office / Office européen des brevets**

(11) **EP 4 701 189 A1**

(12) **EUROPEAN PATENT APPLICATION**

(43) Date of publication:
**25.02.2026 Bulletin 2026/09**

(21) Application number: **24306392.2**

(22) Date of filing: **23.08.2024**

(51) International Patent Classification (IPC):
**H04N 19/503** (2014.01)    **G06N 3/045** (2023.01)
**H04N 19/91** (2014.01)    **H04N 19/90** (2014.01)

(52) Cooperative Patent Classification (CPC):
**H04N 19/91; G06N 3/045; G06N 3/047; G06N 3/08; G06N 3/084; G06N 3/088; H04N 19/503; H04N 19/90**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **InterDigital CE Patent Holdings, SAS 75017 Paris (FR)**

(72) Inventors:
• **DAMODARAN, Bharath Bhushan 56000 VANNES (FR)**
• **LE MEUR, Olivier 35160 TALENSAC (FR)**
• **EL IDRISSI, Taha 35700 RENNES (FR)**
• **LAMBERT, Anne 35250 SAINT-AUBIN-D'AUBIGNE (FR)**
• **SCHNITZLER, Francois 56890 SAINT AVE (FR)**

(74) Representative: **Vossius & Partner Patentanwälte Rechtsanwälte mbB Siebertstraße 3 81675 München (DE)**

(54) **SEPARATION OF MOTION AND RESIDUAL INFORMATION FOR FEATURE-BASED INR VIDEO CODING**

(57)    Systems, methods, and instrumentalities are disclosed for separation of motion and residual information for feature-based INR video coding. A device for video decoding may include a processor. The device may be configured to obtain a motion latent and/or a residual latent for a picture. The device may be configured to obtain a motion synthesis network and/or a residual synthesis network. The device may be configured to apply the motion synthesis network to the motion latent to derive motion information associated with the picture. The device may be configured to apply the residual synthesis network to the residual latent to derive residual information associated with picture. The device may be configured to decode the picture based on the motion information and the residual information.

**FIG. 8**

**Description**

**BACKGROUND**

The present application is related to video coding systems that may be used to compress digital video signals, e.g., to reduce the storage and/or transmission bandwidth needed for such signals. Video coding systems may include, for example, block-based, wavelet-based, and/or object-based systems.

**BRIEF SUMMARY**

Systems, methods, and instrumentalities are disclosed for separation of motion and residual information for feature-based implicit neural representation (INR) video coding. A device for video decoding may include a processor. The device may be configured to obtain a motion latent and/or a residual latent for a picture. The device may obtain a motion synthesis network and/or a residual synthesis network. The device may apply the motion synthesis network to the motion latent to derive motion information associated with the picture. The device may apply the residual synthesis network to the residual latent to derive residual information associated with picture. The device may decode the picture based on the motion information and/or the residual information.

The video decoding device may receive, in video data, an encoded residual latent and/or an encoded motion latent. The device may entropy decode the encoded residual latent and/or the encoded motion latent. The device may entropy decode a plurality of motion synthesis network parameters and/or a plurality of residual synthesis network parameters. The motion synthesis network may be obtained based on the plurality of motion synthesis network parameters, and/or the residual synthesis network may be obtained based on the plurality of residual synthesis network parameters.

In some examples, the video decoding device may determine, based on an indication in video data, that a first entropy model may be associated with the motion latent, and/or that a second entropy model may be associated with the residual latent. The device may entropy decode the motion latent using the first entropy model. The device may entropy decode the residual latent using the second entropy model. The device may determine, based on an indication in video data, that an entropy model may be associated with the motion latent and/or the residual latent. The device may entropy decode a latent grid that includes the motion latent and/or the residual latent using the entropy model. The motion latent and/or the residual latent may be obtained based on the latent grid. The device may determine, based on an indication in video data, that the motion synthesis network may be associated with the motion latent, and/or that the residual synthesis network may be associated with the residual latent. Applying the motion synthesis network to the motion latent and/or applying the residual synthesis network to the residual latent may be performed based on determining that that the motion synthesis network may be associated with the motion latent, and/or that the residual synthesis network may be associated with the residual latent.

A device for video encoding may be configured to determine a motion latent and/or a residual latent for a picture. The device may determine a plurality of motion synthesis network parameters associated with a motion synthesis network. The device may determine a plurality of residual synthesis network parameters associated with a residual synthesis network. The device may encode the residual latent, the motion latent, the plurality of motion synthesis network parameters and/or the plurality of residual synthesis network parameters in video data.

The device may derive inter coding information associated with the picture based on the motion latent, the motion synthesis network, the residual latent, and/or the residual synthesis network. The device may generate a reconstructed picture based on the inter coding information. The device may encode a second picture based on the reconstructed picture.

In some examples, the device may determine to use separate entropy models for the motion latent and/or the residual latent. The device may entropy encode the motion latent using a first entropy model. The device may entropy encode the residual latent using a second entropy model. The device may include an indication in the video data configured to indicate using separate entropy models for the motion latent and/or the residual latent. The device may determine an entropy model for the motion latent and/or the residual latent. The device may obtain a latent grid that includes the motion latent and/or the residual latent. The device may entropy encode the latent grid using the entropy model. The entropy-encoded latent grid may be included in the video data.

The device may determine to use separate synthesis networks for the motion latent and/or the residual latent. The device may include in video data, an indication configured to indicate using the motion synthesis network for the motion latent and/or using the residual synthesis network for the residual latent.

**BRIEF DESCRIPTION OF THE DRAWINGS**

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings.

FIG. 1 shows an example system according to one or more embodiments of the present disclosure.

FIG. 2 shows an example video encoder according to one or more embodiments of the present disclosure.

FIG. 3 shows an example video decoder according to one or more embodiments of the present disclosure.

FIG. 4 illustrates an example neural network that may be used for implicit neural representation (INR).

FIG. 5 is a block diagram illustrating an example encoding process using an INR.

FIG. 6 is an diagram illustrating an example INR variant architecture.

FIG. 7 is a flow diagram illustrating an example of encoding a video frame using a hybrid INR.

FIG. 8 is a flow diagram illustrating an example of encoding a video frame with motion information and/or residual information encoding.

## DETAILED DESCRIPTION

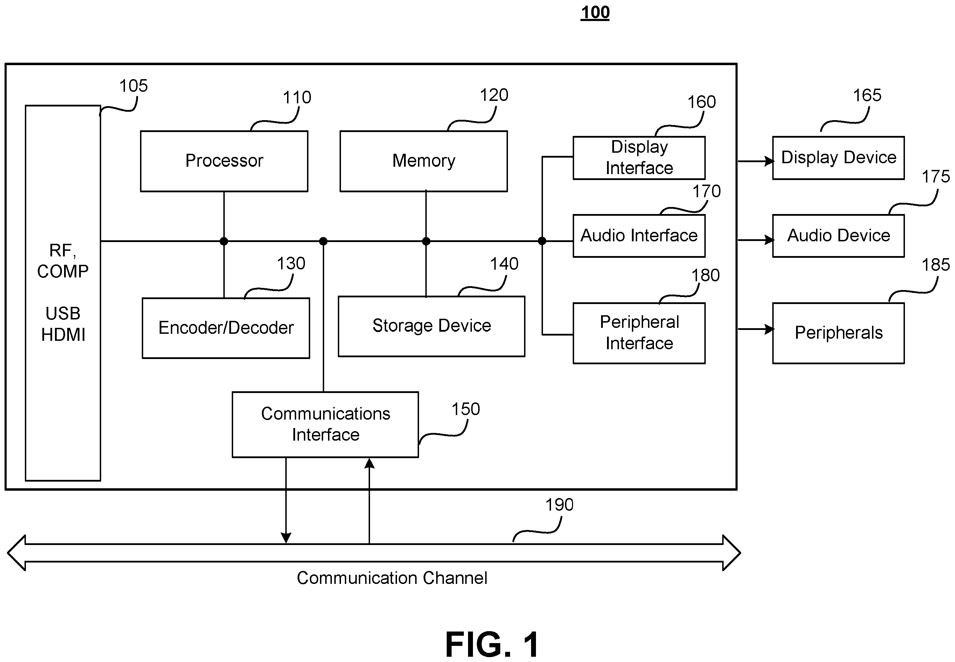

In describing the various embodiments of the present disclosure, certain terminology is used herein for convenience only and should not be considered as limiting such embodiments. In the drawings, the same reference numerals are employed for designating the same elements throughout the several figures and the present description.
Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and/or server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.
One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.
The system 100 may include at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.
The system 100 may include at least one memory 120, for example, a volatile memory device and/or a non-volatile memory device. The system 100 may include a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.
The system 100 may include an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.
Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the embedded memory of the processor 110 and/or the encoder/decoder module 130 may be used to store instructions and/or provide working memory for video encoding and decoding functions. In some embodiments, memory external to the processor 110 and/or the encoder/decoder module 130 (e.g., the memory 120 and/or the storage device 140) may be used for one or more of these functions and/or, for example, to store the operating system of an electronic device (e.g., a television).

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 may include a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in an electronic device (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

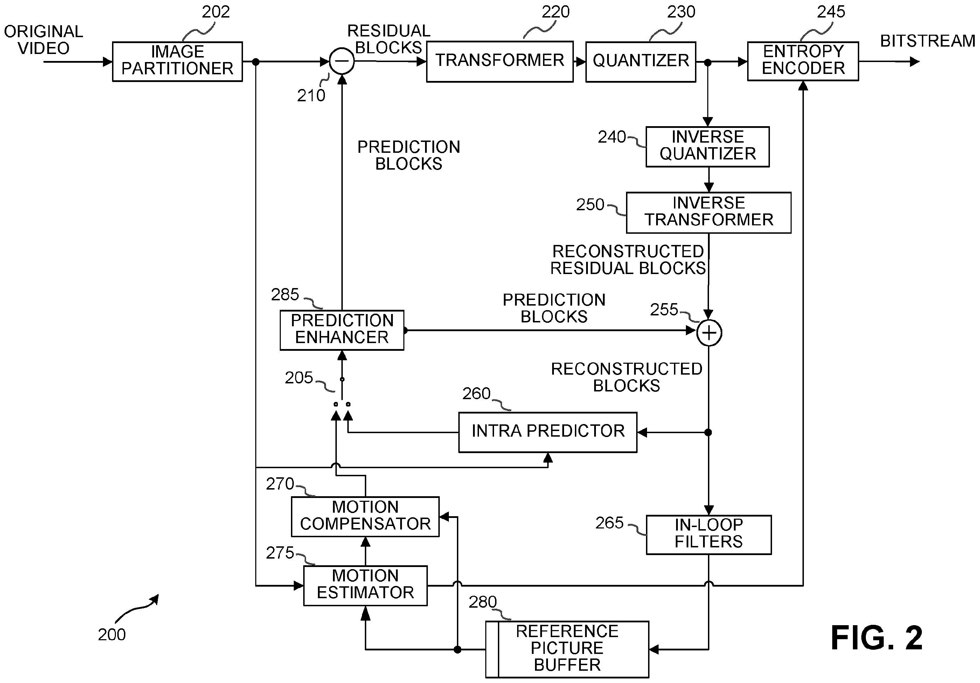

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (WC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

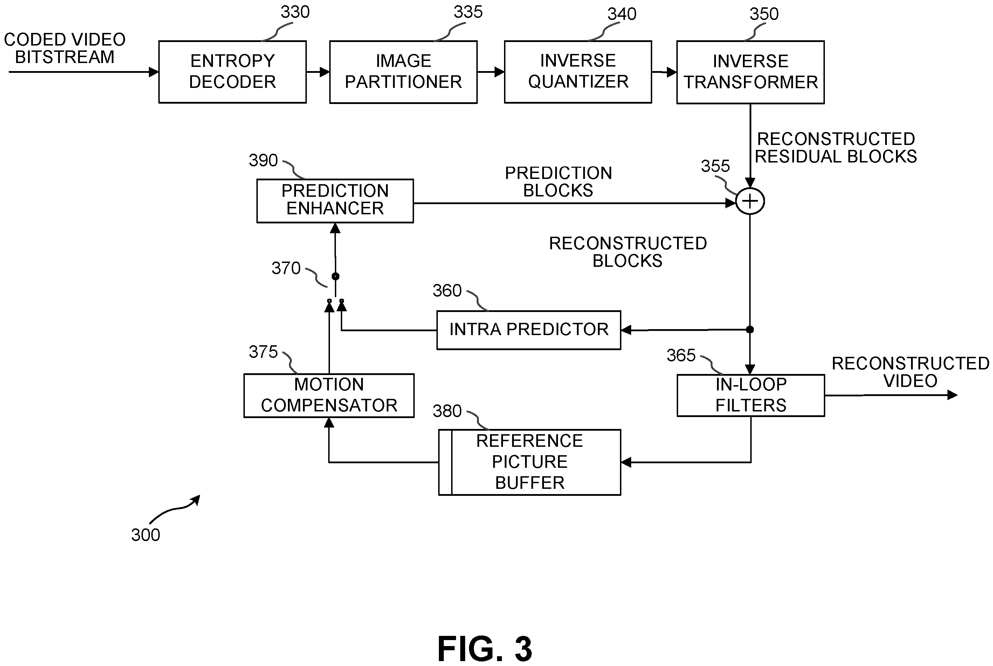

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, Y, and chroma components, U and V (also denoted herein by C, Cb, Cr).

Referring generally to FIG. 2 and the video encoder 200, video data (e.g., one or more video frames) is encoded generally as described below. Prior to encoding, video data may be pre-processed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU may include a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (e.g., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (e.g., reconstruct) respective residual blocks. Depending on the selected prediction mode, a predicted block can be obtained at 370 from an intra predictor 360 (e.g., intra prediction) or from a motion compensator 375 (e.g., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

One or more approaches for neural compression may be described herein. Implicit neural representations (INR) based compression may be used for 2D, video compression, and/or other signals (e.g., 3D scenes or objects or haptic texture). INR approaches may provide a far lower computational complexity than end-to-end neural compression approaches.

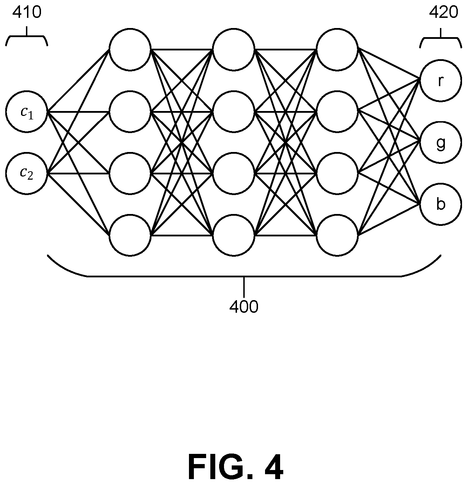

FIG. 4 illustrates an example neural network used for INR. A neural network used for INR may be referred to as an INR network. INR parameterizes a signal as a function (e.g., an INR network 400). The INR may have coordinates 410 as an input, and/or output values 420 of a signal at these coordinates. INR may be applied to images, videos, or 3D objects (e.g., among other applications). In the image case, the inputs (e.g., coordinates 410) may be pixel coordinates $(c_1, c_2)$ and/or the INR may output (e.g., via output values 420) the color values *(r, g, b)* or (y, *u, v*) of the input pixel. The input coordinates 410 may be modified by a transformation before being used as input for the neural network. A transformation may be a Fourier mapping, coordinate transformation, normalization, and/or the like.

The INR may be used to reconstruct a signal by computing the signal values for coordinate inputs (e.g., every necessary coordinate input). The INR may be used to upsample a signal by generating an output for input coordinates corresponding to the upsampled pixels (e.g., the mean of the coordinates between two consecutive pixels for upsampling by a factor of two).

An INR network 400 may be a neural network including one or more neural layers (e.g., one or more fully connected layers). In FIG. 4, the network may include four layers. Intermediate outputs may be represented by circles. A neural layer (e.g., each neural layer) may be described as a function that multiplies the input by a tensor, adds a vector called the bias, and/or applies a nonlinear function on the resulting values. The shape (and/or other characteristics) of the tensor and/or the type of non-linear functions may be called the architecture of the network. The values of the tensor and/or the bias may be noted by the term weights. The weights and/or, if applicable, the parameters of the non-linear functions may be the parameters $\theta$ of the network. The architecture and/or the parameters may define a mode. $f_\theta$ may denote an INR function parameterized by $\theta$.

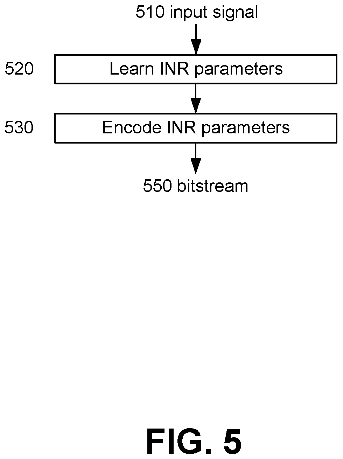

FIG. 5 illustrates an example process to encode a signal 510 using an INR. Encoding a signal 510 using INR may be executed by optimizing the parameters $\theta$ (e.g., or a subset of the parameters) of the INR network to reconstruct the signal 520. Optionally, the optimized parameters may be encoded 530 to create the output bitstream 550. For an image x of size ($M \times N$), the parameters $\theta$ may be optimized by minimizing the following loss function:

$$\text{Loss} = \text{D}(x, f_\theta) + \lambda \times R(\theta) \tag{1}$$

$$D_{MSE} = \frac{1}{MN} \sum_{c_1, c_2} \big(x(c_1, c_2) - f_\theta(c_1, c_2)\big)^2 , \tag{2}$$

With reference to equation (1) and/or (2), D may be a distortion which quantifies the difference between the reconstructed image by $f_\theta$ to the original image x. R may be the bitrate of the encoded parameters. $\lambda$ may be a trade-off parameter between D and R. D may be a differentiable distortion measure (e.g., a mean squared error as in equation (2)). With reference to equation (2), M and N may be the width and height of an image. Other metrics such as learned perceptual image patch similarity (LPIPS) may be used. The optimization of the parameters $\theta$ may be performed by a machine learning approach (e.g., such as a batch gradient descent method).

To decompress the signal, $f_\theta$ may be evaluated at relevant coordinates. Coordinates may be selected at decoding. In examples, the pixel coordinates (e.g., all pixel coordinates) for an image or video may be selected. In examples, for a 256x256 pixel image, coordinates may be pairs $(c_1, c_2)$ for $c_1 \in 0,1, ... ,255$ and/or $c_2 \in 0,1, ... ,255$. In examples, other choices (e.g., other selections) are possible to upsample, downsample, or extend the original image.

The bitstream (e.g., encoding a signal) may be created by encoding the parameters of the neural network. Encoding the parameters of the neural network may be executed by a neural compression codec, or by quantizing the parameters and/or pruning neurons from the network.

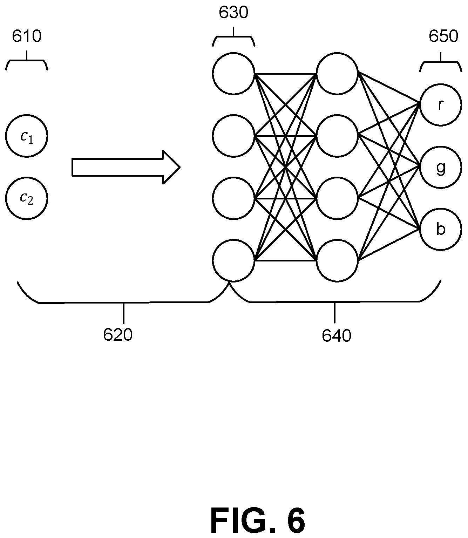

FIG. 6 illustrates a neural architecture that may be an INR variant (e.g., a hybrid INR). The input coordinates 610 may be mapped to a vector of latent features 630. Mapping 620 may rely on a lookup table, a partition of the signal, a hash function, and/or a linear combination of features. Features 630 may be upsampled and/or used as input for an INR synthesis network 640. An INR synthesis network 640 may output the value 650 of the signal for the input coordinates 610. Using an architecture as described herein (e.g., a hybrid INR) may help to handle local features of the input signal. The features for a location may be independent (e.g., completely or mostly independent) from features at other coordinates. In examples, the features may be tailored to a location (e.g., each location).

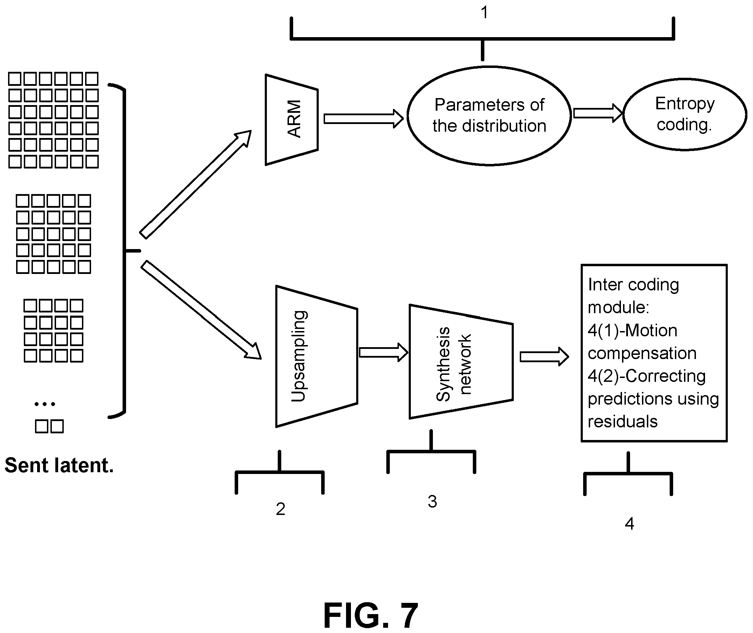

In hybrid INR approaches (e.g., as described with reference to FIG. 7), latent features y may be the largest contributor to the bitstream size (e.g., several orders of magnitude larger than the MLP parameters, except for small bitstream lengths). A solution to reduce the transmission cost of latent features may include quantization and/or entropy coding.

The entropy coding of the latent features may be provided in the formulation of the loss function:

$$\min_{\hat{y},\theta,\psi} D\left(x, f_\theta\left(\text{upsample}(\hat{y})\right)\right) - \lambda \log_2 p_\psi(\hat{y}), \qquad (3)$$

With reference to equation (3), $\hat{y}$ may be the quantized latent and $p_\psi(\hat{y})$ may be the discrete distribution over the quantized latent features. The distribution of these latent features may be a known distribution or estimated using an auto regressive probability model.

According to equation (3), minimizing the rate associated with the transmission of the compressed version of the frame may rely on minimizing the rate associated to the latent features. In examples, minimizing the rate associated with the latent features may be achieved by reducing the amount of information included in the latent features (e.g., risking a poor reconstruction of the sent frame and/or an increase of distortion in $\hat{x}=f_\theta(\text{upsample}(\hat{y}))$). For example, less information in $\hat{y}$ may result in more distortion in $\hat{x}$. In examples, minimizing the rate associated with the latent features may be achieved by estimating the distribution of the sent latent as close as possible to the real sent latent (e.g. unknown sent latent) using a probability model (e.g., a well-chosen probability model). If a probability model is trained, the probability model may be included in the bitstream.

Due to its high dimension, the modeling of the joint distribution of $\hat{y}$ may not be tracked (e.g., the modeling of the joint distribution of $\hat{y}$ may be untrackable). $p_\psi(\hat{y})$ may be factorized and a set of C context latents $c_{ijk}^s$ may be used such that the distribution of a quantized latent (e.g., each quantized latent) $\widehat{y_{1jk}}$ is conditioned on C spatially neighboring latents. The C spatially neighboring latents may have already been decoded and/or selected in a way to introduce as little sequentiality as possible (e.g., to allow parallel decoding of the L channels, in a wavefront-like approach). The position of the latent considered may be known (e.g., must be known) by the emitter and/or the receiver (e.g., the encoder and/or the decoder). The factorization of $p_\psi(\hat{y})$ may be given by:

$$p_\psi(\hat{y}) = \prod_{i,j,k} p_\psi\left(\widehat{y_{1jk}} \mid c_{ijk}^s\right), \qquad (4)$$

With reference to equation (4), $p_\psi\left(\widehat{y_{1jk}} \mid c_{ijk}^s\right)$ may denote the conditional probability of a (e.g., one) latent value at position (i, j, k) conditioned on its spatial context $c_{ijk}^s$. (i, j) may represent the spatial coordinate. k may represent a latent feature.

FIG. 7 illustrates an example flow diagram for encoding a video frame using a hybrid INR. In examples, a sent latent may include the latent values that may be quantized and/or used during the entropic coding in the video data (e.g., the bitstream). To illustrate the operation of an example codec, FIG. 7 shows how an example hybrid INR may work. An example hybrid INR may be a coordinate-based low complexity hierarchical image and/or video codec

The example hybrid INR may include multiple operations (e.g., four operations). At 1, the example hybrid INR may execute a forward pass through an entropy coding model (e.g., the autoregressive model (ARM)) to estimate the parameters of the distribution associated to the sent latent (e.g., used during entropy coding). Sent latent may include the latent values which are quantized and/or used during entropic coding in the bitstream. At 2, the example hybrid INR may up-sample the sent latent using an (e.g., learned or non-learned) upsampling network. At 3, the example hybrid INR may execute a forward pass through the synthesis module to generate (e.g., for every pixel of the upsampled latent) a set of outputs such as optical flows, residuals, and/or pixel-wise weighting. At 4, the outputs may be used by the inter coding module to generate the frame. At 4(1), the example hybrid INR may perform motion compensation using already encoded reference frames (e.g., weighting the resulting motion compensated prediction). At 4(2), the resulting motion compensation prediction may be corrected to generate a resultant frame by applying the residual.

The example hybrid INR for video compression may be built on one or more modules (e.g., two modules), such as an INR variant architecture encoder and/or an inter coding module.

The example hybrid INR encoder may be trained to replace the sent frame by a compressed version including two neural networks (e.g., an autoregressive probability model (e.g., an ARM) and/or a synthesis model) along with a set of L 2-dimensional learned discrete latent variables.

In an example hybrid INR, entropy coding may rely on the discrete distribution $p_\psi(\hat{y})$ extracted from the learned continuous distribution g modeled as Laplace distribution $g \cong \mathcal{L}(\mu_{ijk}, \sigma_{ijk})$ using integration. The network $f_\psi$ may learn to estimate the proper expectation and/or scale parameters $\mu_{ijk}, \sigma_{ijk}$ of a Laplace distribution over the non-quantized latent y (e.g., conditioned on the context latents). The probability of latent feature may be:

$$p_{\psi}\left(\widehat{y_{ijk}}\big|c_{ijk}\right) = \int_{\widehat{y_{ijk}}-0.5}^{\widehat{y_{ijk}}+0.5} g(y)\,dy, \text{ with } g \cong \mathcal{L}\left(\mu_{ijk}, \sigma_{ijk}\right) \quad \text{and} \quad \mu_{ijk}, \sigma_{ijk} = f_{\psi}\left(c_{ijk}\right) \qquad (5)$$

After entropy decoding the latent representations, the decoded data may be upsampled (e.g., to the highest resolution) and/or concatenated into an L dimension representation. The upsampled and/or concatenated data may be an input to the synthesis module, to map the values of one or more channels of a pixel (e.g., all the channels of each pixel) with an RGB value (e.g., in the case of image compression). In examples, the output may be a list of tensors representing the input for the inter coding module responsible of the exploitation of motion compensation (e.g., for video compression).

In some examples, the hybrid INR may learn the latent grids for the motion information and/or learns the latent grids for the residual information in the same latent grid representation. The hybrid INR use a synthesis network (e.g., one synthesis network) to predict both the motion related components and residual related components. In examples, the motion information to be encoded may be significantly smaller compared to the residual information.

As described herein, the motion latents and residual latents may be encoded and/or decoded separately. Multiple synthesis networks (e.g., separate synthesis networks) may be used. The motion information and residual information of the hybrid INR may be separated. In examples, at least two sets of latent grids may be generated (e.g., a first set for the motion information, and/or a second set for the residual information). In examples, at least two ARMs may be used to generate and/or encode the latent grids (e.g., a first for the motion latent, and a second for the residual latent). In examples, at least two synthesis networks may be used (e.g., a first for predicting motion related components and a second for predicting the residual related components). An encoding and a corresponding decoding procedure for hybrid INR may be performed as described herein.

In examples, let F be the current frame to being encoded. For a frame (e.g., a first frame) in the group of pictures (GOP), the encoding may be similar to the hybrid INR (e.g., because there may not be a residual and/or motion).

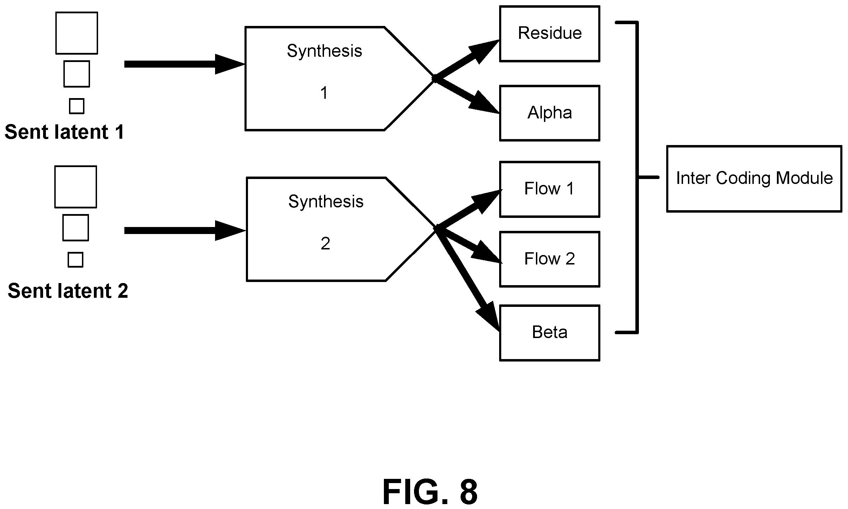

FIG. 8 illustrates an example hybrid INR with separate motion information and/or residual information encoding (e.g., including two sets of latents and two synthesis networks). For the inter-coding, the architecture of separating motion and/or residual may be shown in FIG. 8. FIG. 8 illustrates at least two sets of latents (e.g., a first sent latent (sent latent 1) and a second sent latent (sent latent 2)). A residual latent, for example, the first sent latent (e.g., sent latent 1) may include the latent grid of the residual information. A motion latent, for example, the second sent latent (sent latent 2) may include the latent grid of the motion information.

The residual latent and the motion latent (e.g., sent latent 1 and sent latent 2) may be encoded with an entropy model (e.g., one ARM), or with at least two entropy models (e.g., at least two ARMs). Based on an indication in video data, the first (e.g., or second) entropy model may be associated with the motion latent (e.g., or the residual latent). In examples, the latent grid that includes the motion latent (e.g., or the residual latent) may be entropy decoded using a first entropy model (e.g., or second entropy model).

As shown in FIG. 8, multiple synthesis networks may be used to process the residual latent and the motion latent separately. A residual synthesis network, such as Synthesis 1 shown in FIG. 8, may be a synthesis network of the residual information. A motion synthesis network, such as Synthesis 2 shown in FIG. 8, may be a synthesis network of the motion information. The inter coding module may represent how the frame is the reconstructed from the predicted motion components and residual components.

In examples, the motion information may be smooth and/or may consume a lower size in the bitstream (e.g., optimize the bitstream). The spatial dimension of the latent grid (e.g., highest resolution latent grid) may be reduced to half and/or to another value. The predicted motion vector may be the reduced dimension of the original frame. The motion vector may be upsampled by the factor to match the original resolution of the frame. The upsampling may be either learned or non-learnt (e.g., cubic interpolation, and/or the like).

In examples, a set of latent grids (e.g., one set of latent grids) may represent both motion information and residual information. A latent grid may include the residual latent and the motion latent. At least two synthesis networks may be used to synthesize motion components and residual components separately. A first synthesis network may be applied to the latent grid and output motion components, and a second synthesis network may be applied to the latent grid and output residual components. In examples, there may be at least two sets of latent grids (e.g., a first for motion and/or a second for residual), and/or a synthesis network (e.g., one synthesis network) may output both motion components and residual components.

The loss function to be minimized may be:

$$Loss = D\left(F, \hat{F}\right) + \lambda \times R(Y) \qquad (6)$$

With reference to equation (6), $D(.,.)$ may be the distortion between the ground truth frame and the reconstructed frame $\hat{F}$. $R$ may be the rate (e.g., in bits per pixel). The loss function of equation (6) may apply to intra-coding and/or inter-coding (e.g., if there is only one entropy model). For inter-coding with multiple entropy models (e.g., two ARM models), the loss function may include at least two rate terms as:

$$Loss = D\big(F, \hat{F}\big) + \lambda \times \big(R(Y_m) + R(Y_r)\big) \tag{7}$$

where $Y_m$ and $Y_r$ may represent the motion information and the residual information respectively. In examples, the loss function may include auxiliary losses (e.g., regressing the motion prediction with the ground truth). That is,

$$Loss = D\big(F, \hat{F}\big) + D\big(F, warping\big(\widehat{F_{t-1}}, M_{t \to t-1}, \widehat{F_{t+\delta}}, M_{t \to t+\delta}\big)\big) + \lambda \times \big(R(Y_m) + R(Y_r)\big) \tag{8}$$

With reference to equation (8), $\widehat{F_{t-1}}, \widehat{F_{t+\delta}}$ (e.g., for the p-frame coding may be zero) may be the previous reconstructed frames. $\delta > t$, $M_{t \to t-1}$, and/or $M_{t \to t+\delta}$ may be the predicted motion vectors with respect to the previous reconstructed frames. *warping* may be the operation that reconstructs the frame using motion vectors and/or a previous reference frame.

For the P-frame coding, the motion synthesis network may output a (e.g., one) motion vector output (e.g., Flow 1 in FIG. 8) may be provided. For the B-frame coding, the motion synthesis network may output motion vector outputs (e.g., Flow 1 and Flow 2 in FIG. 8).

The encoding networks may be trained and used for encoding a video into video data (e.g., a bitstream). An encoder may encode the parameters related to the entropy model in the bitstream (e.g., if at least two entropy models are used, it may be indicated (e.g., flagged) in the bitstream). The encoder may determine to use separate entropy models for the motion latent and the residual latent. Based on the determination, the encoder may include an indication in the video data configured to indicate using separate entropy models for the motion latent and the residual latent.

In examples, the encoder may determine to use an entropy model for the motion latent and the residual latent. The encoder may obtain a latent grid that includes the motion latent and the residual latent. The encoder may encode the latent grid using the entropy model. In examples, the encoder may include the entropy-encoded latent grid in the video data.

An encoder may encode the motion latent grids using an entropy model (e.g., a first entropy model). In examples, if the spatial dimension of the highest resolution latent grids is a factor of the original dimension, the spatial dimension information may be encoded in the video data (e.g., bitstream). The encoder may encode the residual latent grids using an entropy model (e.g., a second entropy model).

The encoder may determine to use separate synthesis networks for the motion latent and the residual latent. The encoder may include in video data an indication configured to indicate using a motion synthesis network for the motion latent and using a residual synthesis network for the residual latent. The encoder may encode the parameters of the synthesis network related to motion components (e.g., using fixed bit-representation or by using entropy model). The encoder may encode the parameters of the synthesis network related to residual components (e.g., using fixed bit-representation or by using an entropy model).

Quantization may be applied (e.g., before encoding the parameters of the synthesis network related to motion components and/or residual components). The entropy model may be a probability model (e.g., any general probability model that is learnt by the neural network or a non-learnt probability model).

In examples, the encoder may encode the residual latent, the motion latent, the motion synthesis network parameters, and/or the residual synthesis network parameters in video data. In examples, the encoder may derive inter coding information associated with the picture based on the motion latent, the motion synthesis network, the residual latent, and the residual network. The encoder may generate a reconstructed picture based on the inter coding information. In examples, the encoder may encode a second picture based on the reconstructed picture.

Decoding from the bitstream and/or the reconstruction of the frames may be performed as described herein. For example, a decoder may determine, based on the bitstream, (e.g., obtain from the bitstream) whether one or more entropy models are used (e.g., whether one entropy model or two entropy models are used for the motion latent and the residual latent). In examples, the decoder may determine, based on an indication in video data, that an entropy model is associated with the motion latent and/or the residual latent. In examples, a decoder may determine, based on an indication in video data, that a first entropy model is associated with a motion latent, and that a second entropy model is associated with a residual latent. In examples, the decoder may entropy decode the motion latent using the first entropy model and may entropy decode the residual latent using the second entropy model.

The decoder may determine (e.g., obtain) the parameters of the entropy model (e.g., the one or more entropy models) from the bitstream. The decoder may determine (e.g., obtain) the motion latent grids from the bitstream. The decoder may determine (e.g., obtain) the residual latent grids from the bitstream. In examples, the decoder may decode a latent grid that includes the motion latent and/or the residual latent using the entropy model. In examples, the motion latent and/or the residual latent may be obtained based on the latent grid.

The decoder may determine (e.g., obtain) the information about the number of synthesis network from the bitstream. A decoder may determine, based on an indication in video data, that a motion synthesis network is associated with the motion latent, and/or that a residual synthesis network is associated with the residual latent. Based on the determination, the decoder may apply the motion synthesis network to the motion latent and apply the residual synthesis network to the residual latent.

The decoder may determine (e.g., obtain) the parameters of one or more synthesis networks (e.g., the synthesis network). In examples, a decoder may entropy decode a plurality of motion synthesis network parameters and a plurality of residual synthesis network parameters. The motion synthesis network may be obtained based on the plurality of motion synthesis network parameters, and the residual synthesis network may be obtained based on the plurality of residual synthesis network parameters.

In examples, the decoder may apply the motion synthesis network to the motion latent to derive motion information associated with a picture, and/or apply the residual synthesis network to the residual latent to derive residual information associated with a picture.

The decoder may apply the inverse quantization process to the decoded parameters as described herein. The decoder may reconstruct the frame by employing the one or more synthesis networks on the motion latents and/or on the residual latents, to obtain the motion related components and/or the residual related components. The decoder may apply the inter-coding module.

Examples related to learning based compression may be provided herein. INR approaches may yield a far lower computational complexity than end-to-end neural compression approaches

One or more embodiments provide a computer program comprising instructions which if/when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGS. 2 and 3 may be implemented as one or more modules and modified according to the various embodiments of the present disclosure.

The various embodiments described herein provide at least the following features, devices or aspects, alone or on any combination, across various claim categories and types:

> i. Encoding, into coded video data, syntax elements that can enable the decoder to decode the coded video data, according to any of the embodiments described herein.

> ii. Video data (e.g., a bitstream) that may include one or more of the described syntax elements, or variations thereof, whether transmitted, stored, or otherwise made available.

> iii. Creating, transmitting, receiving, and/or decoding of the bitstream.

> iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data in order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:

i. session description protocol (SDP), for example as described in RFCs and/or used in conjunction with real-time transport protocol (RTP) transmission.

ii. hypertext transfer protocol (HTTP) live Streaming (HLS) manifest transmitted over HTTP.

iii. dynamic adaptive streaming over HTTP (DASH) media presentation description (MPD) descriptors, for example as used in DASH and transmitted over HTTP.

iv. RTP header extensions, for example as used during RTP streaming.

v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter may be used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

Example 1. A method for video decoding, may include obtaining a motion latent and/or a residual latent for a picture; obtaining a motion synthesis network and/or a residual synthesis network; applying the motion synthesis network to the motion latent to derive motion information associated with the picture; applying the residual synthesis network to the residual latent to derive residual information associated with picture; and/or decoding the picture based on the motion information and/or the residual information.

Example 2. The method of example 1, further including receiving, in video data, an encoded residual latent and/or an encoded motion latent; and/or entropy decoding the encoded residual latent and/or the encoded motion latent.

Example 3. The method of any one of examples 1 or 2, further including entropy decoding a plurality of motion synthesis network parameters and/or a plurality of residual synthesis network parameters, wherein the motion synthesis network may be obtained based on the plurality of motion synthesis network parameters, and/or the residual synthesis network may be obtained based on the plurality of residual synthesis network parameters.

Example 4. The method of any one of examples 1-3, further including determining, based on an indication in video data, that a first entropy model may be associated with the motion latent, and/or that a second entropy model may be associated with the residual latent; entropy decoding the motion latent using the first entropy model; and/or entropy decoding the residual latent using the second entropy model.

Example 5. The method of any one of examples 1-3, further including determining, based on an indication in video data, that an entropy model may be associated with the motion latent and/or the residual latent; and/or entropy decoding a latent grid that comprises the motion latent and/or the residual latent using the entropy model, wherein the motion latent and/or the residual latent may be obtained based on the latent grid.

Example 6. The method of any one of examples 1-5, further including determining, based on an indication in video data, that the motion synthesis network may be associated with the motion latent, and/or that the residual synthesis network may be associated with the residual latent, wherein applying the motion synthesis network to the motion latent and/or applying the residual synthesis network to the residual latent may be performed based on the determining.

Example 7. A method for video encoding, including determining a motion latent and/or a residual latent for a picture; determining a plurality of motion synthesis network parameters associated with a motion synthesis network; determining a plurality of residual synthesis network parameters associated with a residual synthesis network; and/or encoding the residual latent, the motion latent, the plurality of motion synthesis network parameters and/or the plurality of residual synthesis network parameters in video data.

Example 8. The method of example 7, further including deriving inter coding information associated with the picture based on the motion latent, the motion synthesis network, the residual latent, and/or the residual synthesis network; generating a reconstructed picture based on the inter coding information; and/or encoding a second picture based on the reconstructed picture.

Example 9. The method of any one of examples 7 or 8, further including determining to use separate entropy models for the motion latent and/or the residual latent; entropy encoding the motion latent using a first entropy model; entropy encoding the residual latent using a second entropy model; and/or including an indication in the video data configured to indicate using separate entropy models for the motion latent and/or the residual latent.

Example 10. The method of any one of examples 7 or 8, further including determining an entropy model for the motion latent and/or the residual latent; obtaining a latent grid that includes the motion latent and/or the residual latent; and/or entropy encoding the latent grid using the entropy model, wherein the entropy-encoded latent grid may be included in the video data.

Example 11. The method of any one of examples 7-10, further including determining to use separate synthesis networks for the motion latent and/or the residual latent; and/or including in video data an indication configured to indicate using the motion synthesis network for the motion latent and/or using the residual synthesis network for the residual latent.

Example 12. A computer program product stored on a non-transitory computer readable medium and/or comprising program code instructions for implementing any one of the methods of examples 1-11 when executed by a processor.

Example 13. Video data comprising information representative of a current picture encoded in accordance with any one of examples 7-11.

## Claims

1. A device for video decoding, comprising:
   a processor configured to:

obtain a motion latent and a residual latent for a picture;
obtain a motion synthesis network and a residual synthesis network;
apply the motion synthesis network to the motion latent to derive motion information associated with the picture;
apply the residual synthesis network to the residual latent to derive residual information associated with the picture; and
decode the picture based on the motion information and the residual information.

2. The device of claim 1, wherein the processor is further configured to:

receive, in video data, an encoded residual latent and an encoded motion latent; and
entropy decode the encoded residual latent and the encoded motion latent.

3. The device of any one of claims 1-2, wherein processor is further configured to:
entropy decode a plurality of motion synthesis network parameters and a plurality of residual synthesis network parameters, wherein the motion synthesis network is obtained based on the plurality of motion synthesis network parameters, and the residual synthesis network is obtained based on the plurality of residual synthesis network parameters.

4. The device of any one of claims 1-3, wherein the processor is further configured to:

determine, based on an indication in video data, that a first entropy model is associated with the motion latent, and that a second entropy model is associated with the residual latent;
entropy decode the motion latent using the first entropy model; and
entropy decode the residual latent using the second entropy model.

5. The device of any one of claims 1-3, wherein the processor is further configured to:

determine, based on an indication in video data, that an entropy model is associated with the motion latent and the residual latent; and
entropy decode a latent grid that comprises the motion latent and the residual latent using the entropy model, wherein the motion latent and the residual latent are obtained based on the latent grid.

6. The device of any one of claims 1-5, wherein the processor is further configured to:
determine, based on an indication in video data, that the motion synthesis network is associated with the motion latent, and that the residual synthesis network is associated with the residual latent, wherein applying the motion synthesis network to the motion latent and applying the residual synthesis network to the residual latent is performed based on the determining.

7. A device for video encoding, comprising:
a processor configured to:

determine a motion latent and a residual latent for a picture;
determine a plurality of motion synthesis network parameters associated with a motion synthesis network;
determine a plurality of residual synthesis network parameters associated with a residual synthesis network; and
encode the residual latent, the motion latent, the plurality of motion synthesis network parameters and the plurality of residual synthesis network parameters in video data.

8. The device of claim 7, wherein the processor is further configured to:

derive inter coding information associated with the picture based on the motion latent, the motion synthesis network, the residual latent, and the residual synthesis network;
generate a reconstructed picture based on the inter coding information; and
encode a second picture based on the reconstructed picture.

9. The device of any one of claims 7 or 8, wherein the processor is further configured to:

determine to use separate entropy models for the motion latent and the residual latent;
entropy encode the motion latent using a first entropy model;

entropy encode the residual latent using a second entropy model; and
include an indication in the video data configured to indicate using separate entropy models for the motion latent and the residual latent.

10. The device of any one of claims 7 or 8, wherein the processor is further configured to:

determine an entropy model for the motion latent and the residual latent;
obtain a latent grid that comprises the motion latent and the residual latent; and
entropy encode the latent grid using the entropy model, wherein the entropy-encoded latent grid is included in the video data.

11. The device of any one of claims 7-10, wherein the processor is further configured to:

determine to use separate synthesis networks for the motion latent and the residual latent; and
include in video data, an indication configured to indicate using the motion synthesis network for the motion latent and using the residual synthesis network for the residual latent.

12. A method for video decoding, comprising:

obtaining a motion latent and a residual latent for a picture;
obtaining a motion synthesis network and a residual synthesis network;
applying the motion synthesis network to the motion latent to derive motion information associated with the picture;
applying the residual synthesis network to the residual latent to derive residual information associated with the picture; and
decoding the picture based on the motion information and the residual information.

13. The method of claim 12, further comprising:

receiving, in video data, an encoded residual latent and an encoded motion latent; and
entropy decoding the encoded residual latent and the encoded motion latent.

14. The method of any one of claims 12-13, further comprising:
entropy decoding a plurality of motion synthesis network parameters and a plurality of residual synthesis network parameters, wherein the motion synthesis network is obtained based on the plurality of motion synthesis network parameters, and the residual synthesis network is obtained based on the plurality of residual synthesis network parameters.

15. The method of any one of claims 12-14, further comprising:

determining, based on an indication in video data, that a first entropy model is associated with the motion latent, and that a second entropy model is associated with the residual latent;
entropy decoding the motion latent using the first entropy model; and
entropy decoding the residual latent using the second entropy model.

**FIG. 1**

EP 4 701 189 A1

FIG. 2

CODED VIDEO
BITSTREAM →

| 330 ENTROPY DECODER | → | 335 IMAGE PARTITIONER | → | 340 INVERSE QUANTIZER | → | 350 INVERSE TRANSFORMER |

RECONSTRUCTED
RESIDUAL BLOCKS

390
PREDICTION
ENHANCER

PREDICTION
BLOCKS →

355
⊕

RECONSTRUCTED
BLOCKS

370

360
INTRA PREDICTOR

375
MOTION
COMPENSATOR

365
IN-LOOP
FILTERS → RECONSTRUCTED VIDEO

380
REFERENCE
PICTURE
BUFFER

300

**FIG. 3**

FIG. 4

510 input signal

| 520 | Learn INR parameters |
|---|---|

| 530 | Encode INR parameters |
|---|---|

550 bitstream

# FIG. 5

**FIG. 6**

FIG. 7

FIG. 8

| | Europäisches Patentamt European Patent Office Office européen des brevets | **EUROPEAN SEARCH REPORT** | **Application Number** EP 24 30 6392 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/006167 A1 (DOLBY LABORATORIES LICENSING CORP [US]) 4 January 2024 (2024-01-04) * paragraphs [0037], [0044], [0047] - [0052], [0061]; figures 5A, 5B * ----- | 1-15 | INV. H04N19/503 G06N3/045 H04N19/91 H04N19/90 |
| A | LEGUAY THOMAS ET AL: "Cool-chic video: Learned video coding with 800 parameters", 2024 DATA COMPRESSION CONFERENCE (DCC), IEEE, 19 March 2024 (2024-03-19), pages 23-32, XP034607827, DOI: 10.1109/DCC58796.2024.00010 [retrieved on 2024-05-21] * sections 1, 2, and 5 * ----- | 1-15 | |
| A | XIANG LIU ET AL: "An Efficient Implicit Neural Representation Image Codec Based on Mixed Autoregressive Model for Low-Complexity Decoding", ARXIV.ORG, CORNELL UNIVERSITY LIBRARY, 201 OLIN LIBRARY CORNELL UNIVERSITY ITHACA, NY 14853, 23 January 2024 (2024-01-23), XP091779852, * sections I., II., III. * ----- | 1-15 | TECHNICAL FIELDS SEARCHED (IPC) H04N G06N |

The present search report has been drawn up for all claims

| Place of search | Date of completion of the search | Examiner |
|---|---|---|
| Munich | 13 February 2025 | Hindelang, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 30 6392

This annex lists the patent family members relating to the patent documents cited in the above-mentioned European search report.
The members are as contained in the European Patent Office EDP file on
The European Patent Office is in no way liable for these particulars which are merely given for the purpose of information.

13-02-2025

| Patent document cited in search report | Publication date | Patent family member(s) | Publication date |
|---|---|---|---|
| WO 2024006167 A1 | 04-01-2024 | NONE | |

EPO FORM P0459

For more details about this annex : see Official Journal of the European Patent Office, No. 12/82